(19) Europäisches Patentamt
European Patent Office
Office européen des brevets

(11) **EP 4 119 616 A1**

(12) **EUROPEAN PATENT APPLICATION**
published in accordance with Art. 153(4) EPC

(43) Date of publication:
**18.01.2023 Bulletin 2023/03**

(21) Application number: **21768175.8**

(22) Date of filing: **10.03.2021**

(51) International Patent Classification (IPC):
**C08L 91/00** (2006.01)    **C08L 101/12** (2006.01)
**C09K 5/14** (2006.01)    **C08K 3/013** (2018.01)
**C08K 3/34** (2006.01)

(52) Cooperative Patent Classification (CPC):
**C08K 3/013; C08K 3/34; C08L 91/00;**
**C08L 101/12; C09K 5/14**

(86) International application number:
**PCT/JP2021/009672**

(87) International publication number:
**WO 2021/182549 (16.09.2021 Gazette 2021/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.03.2020 JP 2020041980**

(71) Applicant: **SUMITOMO METAL MINING CO., LTD.**
**Tokyo**
**105-8716 (JP)**

(72) Inventors:
• **KOBAYASHI, Hiroshi**
**Ome-shi, Tokyo 198-0025 (JP)**
• **KIBE, Tatsuo**
**Ome-shi, Tokyo 198-0025 (JP)**
• **KASHIWAYA, Satoshi**
**Ome-shi, Tokyo 198-0025 (JP)**

(74) Representative: **Jones, Nicholas Andrew**
**Withers & Rogers LLP**
**2 London Bridge**
**London SE1 9RA (GB)**

(54) **THERMALLY CONDUCTIVE COMPOSITION**

(57)    Provided is a thermally conductive composition that can easily be shaped into a sheet or the like, and is capable of effectively suppressing pump out. Specifically provided is a thermally conductive composition that includes a base oil composition and an inorganic powder filler, wherein: the base oil composition contains a base oil, a thermoplastic resin that has a softening point of 50-150°C, and a thixotropic agent; the inorganic powder filler contains a first inorganic powder filler having an average particle size in the range of 10-100 $\mu$m, a second inorganic powder filler, and a third inorganic powder filler; and the thermoplastic resin is included at a proportion of 50-200 parts by mass and the thixotropic agent is included at a proportion of 1-10 parts by mass per 100 parts by mass of the base oil.

**Description**

TECHNICAL FIELD

The present invention mainly relates to a thermally conductive composition to be used between a heat generating component and a heat dissipating component.

BACKGROUND ART

In an electronic device, a heat dissipating component such as a heat sink is attached to dissipate heat generated from heat generating components such as semiconductor elements and mechanical parts. In order to efficiently transfer heat to the heat dissipating component, a thermally conductive member is sandwiched between the heat generating component and the heat dissipating component. The thermally conductive members include a solid thermally conductive sheet, liquid thermally conductive grease, curable thermally conductive grease that changes from a liquid state to a solid state, and the like, and are used according to applications of use.

For example, Patent Document 1 discloses thermally conductive grease containing a base oil including a copolymer of unsaturated dicarboxylic acid dibutyl ester and $\alpha$-olefin, and a thermally conductive filler. Patent Document 1 mentions that the thermally conductive grease has high thermal conductivity, and good dispensability and compressibility.

However, such thermally conductive grease is in a form of a paste at an ambient temperature and flows when pressurized, so that it is easily applied on a thin film and has excellent adhesion, but there is a problem that such thermally conductive grease easily flows out from a coated part due to expansion and contraction of a heat generating component or the like caused by repetition of heat generation and heat dissipation and has inferior pump-out resistance. Note here that, pump-out refers to a phenomenon in which thermally conductive grease protrudes from the coated part, and voids (air gaps) are generated inside the grease, and good thermal conductivity cannot be maintained.

In order to solve these problems, a thermally conductive composition, which has properties of being solid at ambient temperature, but adhering to an adherend by absorbing heat and being softened after being incorporated into a heat generator, and which is capable of reducing thermal resistance, is being developed (see, for example, Patent Documents 2 to 4). Information relating to technologies of thermally conductive compositions is disclosed in, for example, Japanese Unexamined Patent Application, Publication No. 2001-89756 (Patent Document 2), Japanese Unexamined Patent Application, Publication No. 2004-75760 (Patent Document 3), and Japanese Unexamined Patent Application, Publication No. 2007-150349 (Patent Document 4).

Patent Document 1: Japanese Patent No. 4713161
Patent Document 2: Japanese Unexamined Patent Application, Publication No. 2001-89756
Patent Document 3: Japanese Unexamined Patent Application, Publication No. 2004-75760
Patent Document 4: Japanese Unexamined Patent Application, Publication No. 2007-150349

DISCLOSURE OF THE INVENTION

Problems to be Solved by the Invention

However, in the above-mentioned conventional technologies, since blending of raw materials was not appropriate, molding such as sheet forming was difficult or pump-out resistance was insufficient in some cases.

The present invention has been proposed in view of such circumstances, and has an object to provide a thermally conductive composition that can be easily molded, for example, into a sheet, and is capable of effectively suppressing occurrence of pump-out.

Means for Solving the Problems

The present inventors have extensively studied in order to achieve the above-mentioned objects, and as a result they have found that a thermally conductive composition containing a plurality of inorganic powder fillers having different average particle diameters, and including a base oil composition containing a thermoplastic resin having a predetermined softening point and a thixotropy adjusting agent at a specific ratio can solve the above-mentioned problems, and have reached completion of the present invention.

(1) A first aspect of the present invention is a thermally conductive composition including a base oil composition and an inorganic powder filler,

the base oil composition including a base oil, a thermoplastic resin having a softening point of 50°C or more and 150°C or less, and a thixotropy adjusting agent,

the inorganic powder filler including a first inorganic powder filler having an average particle diameter in a range of 10 $\mu$m or more and 100 $\mu$m or less, a second inorganic powder filler having an average particle diameter being different from the average particle diameter of the first inorganic powder filler, and a third inorganic powder filler having an average particle diameter being different from the average particle diameter of the first inorganic powder filler and the average particle diameter of the second inorganic powder filler,

the inorganic powder filler having average particle diameters satisfying the following formulae (1) and (2),

the oil base composition containing the thermoplastic resin in a content of 50 parts by mass or more and 200 parts by mass or less, and the thixotropy adjusting agent in a content of 1 part by mass or more and 10 parts by mass or less, with respect to 100 parts by mass of the base oil.

$$D_2/D_1 < 0.70 \quad (1)$$

$$D_3/D_2 < 0.60 \quad (2)$$

[In the formulae, $D_1$ represents an average particle diameter of the first inorganic powder filler, $D_2$ represents an average particle diameter of the second inorganic powder filler, and $D_3$ represents an average particle diameter of the third inorganic powder filler.]

(2) A second aspect of the present invention is the thermally conductive composition in the first aspect in which the second inorganic powder filler has an average particle diameter in a range of 1 $\mu$m or more and 50 $\mu$m or less, and the third inorganic powder filler has an average particle diameter in a range of 0.1 $\mu$m or more and 5 $\mu$m or less.

(3) A third aspect of the present invention is the thermally conductive composition in the first or second aspect, including 40 parts by mass or more and 80 parts by mass or less of the first inorganic powder filler, 10 parts by mass or more and 50 parts by mass or less of the second inorganic powder filler, and 10 parts by mass or more and 40 parts by mass or less of the third inorganic powder filler with respect to 100 parts by mass of the inorganic powder filler.

(4) A fourth aspect of the present invention is the thermally conductive composition in any one of the first to third aspects, in which a total of the base oil and the thermoplastic resin is 5.3 parts by mass or more and 33.3 parts by mass or less with respect to 100 parts by mass of the inorganic powder filler.

(5) A fifth aspect of the present invention is the thermally conductive composition in any one of the first to fourth aspects, in which a thermally conductive sheet formed of the thermally conductive composition has a thickness of 200 $\mu$m or less, provided that the thickness is measured when the thermally conductive sheet with a film thickness of 0.5 mm formed on a surface of a base material is applied with a pressure of 0.1 MPa at 80°C.

(6) A sixth aspect of the present invention is the thermally conductive composition in any one of the first to fifth aspects, in which the thermoplastic resin includes at least one or more resins selected from an ester resin, an acrylic resin, a rosin resin, and a cellulose resin.

(7) A seventh aspect of the present invention is a thermally conductive composition in any one of the first to sixth aspects, in which the base oil contains at least one or more types selected from a mineral oil, a synthetic hydrocarbon oil, a diester, a polyol ester, and a phenyl ether.

(8) An eighth aspect of the present invention is the thermally conductive composition in any one of the first to seventh aspects in which the thixotropy adjusting agent contains at least one or more types selected from bentonite, mica, kaolin, sepiolite, saponite, and hectorite.

(9) A ninth aspect of the present invention is the thermally conductive composition in any one of the first to eighth aspects, in which the inorganic powder filler contains at least one or more types selected from copper, aluminum, zinc oxide, magnesium oxide, aluminum oxide, aluminum nitride, and silicon carbide.

Effects of the Invention

The thermally conductive composition of the present invention can be easily molded, for example, into a sheet, and occurrence of pump-out can be effectively suppressed.

PREFERRED MODE FOR CARRYING OUT THE INVENTION

Hereinafter, specific embodiments of the present invention (hereinafter, referred to as "the present embodiments") will be described in detail. The present invention is not limited to the following embodiments, and can be carried out with appropriate modifications within the scope of the object of the present invention.

<<Thermally conductive composition>>

The thermally conductive composition according to the present embodiment contains a base oil composition and an inorganic powder filler. The base oil composition contains a base oil, a thermoplastic resin having a softening point of 50°C or more and 150°C or less, and a thixotropy adjusting agent, and the inorganic powder filler contains a plurality of inorganic powder fillers having different average particle diameters, and has a ratio of the average particle diameters in the inorganic powder fillers in a predetermined range.

The study by the present inventors has revealed the followings. In other words, when a thermally conductive composition includes a base oil composition containing base oil, and a thixotropy adjusting agent, the thermally conductive composition can be rich in flexibility and have good handling property. Thus, for example, a thermally conductive sheet can be easily molded out from the thermally conductive composition, and the heat generating component and the heat dissipating component can be allowed to adhere to each other via the thus molded thermally conductive sheet.

Furthermore, when the base oil composition includes a thermoplastic resin having a softening point of 50°C or more and 150°C or less at a predetermined rate, the molded thermally conductive sheet is softened at a predetermined temperature or more, thus causing a so-called phase-change. Thus, for example, at time of high temperature by heat generation from the heat generating component, fluidity of the molded thermally conductive sheet is increased. Then, when the thermally conductive composition contains a plurality of inorganic powder fillers each having a predetermined average particle diameter and the ratios of the average particle diameters of the inorganic powder fillers are in predetermined ranges, the thermally conductive composition can spread more uniformly and can be formed into a thin film in a state in which the content of the inorganic powder filler is increased. Thus, since an interval between the heat generating component and the heat dissipating component becomes narrower and has high adhesion, the thermal resistance can be lowered, and the heat conductive efficiency can be improved.

On the other hand, as a subsequent temperature drop, the thermally conductive sheet that has uniformly spread hardens at a temperature less than a predetermined temperature based on the softening point of the thermoplastic resin to cause a phase change, thereby forming a thermally conductive sheet having moderate flexibility. Thus, while the adhesion between the heat generating component and the heat dissipating component is maintained, the outflow of the base oil can be prevented by the networked thermoplastic resin and the pump out can be effectively suppressed.

A thermally conductive sheet of the thermally conductive composition is formed such that a film thickness is 0.5 mm, and the film thickness when a pressure of 0.1 MPa is applied to the thermally conductive sheet at 80°C is preferably 200 $\mu$m or less, more preferably 150 $\mu$m or less, and further preferably 100 $\mu$m or less. As a result, the space between the heat generating component and the heat dissipating component becomes narrow, the thermal resistance can be further reduced, and the heat conductive efficiency can be improved.

Furthermore, the thermally conductive composition according to the present embodiment can be easily formed into a thermally conductive sheet. For example, a thermally conductive sheet is transported in a state in which the thermally conductive sheet is disposed on a surface of the heat generating component, and the heat generating component and the heat dissipating component may be joined to each other via a thermally conductive sheet at the transport destination.

Hereinafter, a base oil composition included in the thermally conductive composition and an inorganic powder filler will be described.

<1. Base oil composition>

The base oil composition contains at least a base oil, a thermoplastic resin, and a thixotropy adjusting agent. Each component contained in the base oil composition will be described.

(1) Base oil

As the base oil, various base oils can be used, and examples thereof include a mineral oil, a hydrocarbon base oil such as a synthetic hydrocarbon oil, an ester-based oil, an ether-based oil, a phosphate ester, a silicone oil, a fluorine oil, and the like. Among them, a base oil containing at least one or more types selected from a mineral oil, a hydrocarbon-based oil such as a synthetic hydrocarbon oil, an ester-based oil, and an ether-based oil, is preferably used.

As the mineral oil, for example, the mineral oil-based lubricating oil fraction is purified by a suitable combination of refining methods such as solvent extraction, solvent dewaxing, hydrorefining, hydrocracking, and wax isomerization, and a 150 neutral oil, a 500 neutral oil, a bright stock, a high viscosity index base oil, or the like, can be used. The mineral oil used as the base oil is preferably a highly hydrogenated high viscosity index base oil.

As the synthetic hydrocarbon oil, for example, a poly-$\alpha$-olefin such as normal paraffin, isoparaffin, polybutene, polyisobutylene, 1-decene oligomer, co-oligomer of 1-decene and ethylene, or a hydride thereof can be used alone or in a mixture of two or more kinds. Among them, poly-α-olefin is more preferred. Alkylbenzene, alkylnaphthalene, or the like, can also be used.

Examples of the ester base oil include diester and polyol ester. Examples of the diester include an ester of a dibasic acid such as adipic acid, azelaic acid, sebacic acid, and dodecanedioic acid. The dibasic acid is preferably aliphatic dibasic acid having 4 or more and 36 or less carbon atoms. The alcohol residue constituting the ester part is preferably a monohydric alcohol residue having 4 or more and 26 or less carbon atoms. The polyol ester is an ester of neopentyl polyol in which no hydrogen atom exists on the carbon at the β-position, and specific examples thereof include carboxylic acid ester such as neopentyl glycol, trimethylolpropane, and pentaerythritol. The carboxylic acid residue constituting the ester portion is preferably a monocarboxylic acid residue having 4 or more and 26 or less carbon atoms.

Examples of the ether-based base oil include polyglycol, (poly) phenyl ether, and the like. Examples of the polyglycol include polyethylene glycol, polypropylene glycol, and derivatives thereof. Examples of the (poly) phenyl ether include alkylated diphenyl ethers such as monoalkylated diphenyl ethers and dialkylated diphenyl ethers, alkylated tetraphenyl ethers such as monoalkylated tetraphenyl ethers and dialkylated tetraphenyl ethers, and alkylated pentaphenyl ethers such as pentaphenyl ethers, monoalkylated pentaphenyl ethers, and dialkylated pentaphenyl ethers.

The dynamic viscosity of the base oil is preferably 10 mm$^2$/s or more and 1200 mm$^2$/s or less at 40°C. The base oil having dynamic viscosity at 40°C of 10 mm$^2$/s or more is preferable because evaporation of the base oil and oil separation at a high temperature tend to be suppressed. Furthermore, when the base oil having dynamic viscosity at 40°C of 1200 mm$^2$/s or less is used, a thermally conductive composition that can be easily handled is achieved, and when the phase-change occurs, sufficient fluidity can be obtained.

(2) Thermoplastic resin

The thermoplastic resin softens the thermally conductive composition to impart fluidity at a high temperature. As the thermoplastic resin, one having a softening point of 50°C or more and 150°C or less is used. Note here that the softening point is a temperature at which the thermoplastic resin softens and starts to be deformed when thermoplastic resin is heated. The softening point can be measured using, for example, a melt-mass flow rate measuring machine.

As the thermoplastic resin having a softening point of 50°C or more and 150°C or less, at least one or more resins selected from an ester resin, an acrylic resin, a rosin resin, and a cellulose resin are preferably contained. Furthermore, a mixture obtained by mixing a thermoplastic resin such as wax with various compounds such as a rosin derivative may be used.

The content of the thermoplastic resin is 50 parts by mass or more and 200 parts by mass or less with respect to 100 parts by mass of base oil. When the content is less than 50 parts by mass, even when a phase-change of the thermally conductive composition occurs, sufficient fluidity is not obtained, and further pump-out resistance is not obtained. When the content is more than 200 parts by mass, the thermally conductive composition is hardened, and cannot be molded into a sheet or the like.

Note here that the total of the base oil and the thermoplastic resin is preferably 5.3 parts by mass or more and 33.3 parts by mass or less with respect to 100 parts by mass of the below-mentioned inorganic powder filler. In such a range, the thermal conductivity of the thermally conductive composition is improved, and molding such as forming a sheet can be performed more easily. Furthermore, at high temperature, the fluidity of the molded thermally conductive sheet is enhanced, the thermally conductive composition spreads more uniformly and can be formed into a thin film.

(3) Thixotropy adjusting agent

The thixotropy adjusting agent imparts pump-out resistance to the thermally conductive composition.

Examples of the thixotropy adjusting agent include organically treated bentonite, organically treated sepiolite, urea compounds, sodium terephthalamate, polytetrafluoroethylene, silica gel, mica, kaolin, saponite, and hectorite.

The content of the thixotropy adjusting agent is 1 part by mass or more and 10 parts by mass or less with respect to 100 parts by mass of the base oil. When the content is less than 1 part by mass, pump-out resistance cannot be obtained. When the content is more than 10 parts by mass, the thermally conductive composition is hardened, and cannot be molded into a sheet or the like.

(4) Other additives

In order to enhance various properties of a thermally conductive composition, additives including at least one or more agents selected from an antioxidant agent, a diffusion inhibitor, and a dispersing agent can be contained.

The antioxidant agent prevents oxidation of the base oil contained in the base oil composition. Examples of the antioxidant agent include compounds such as hindered amine, hindered phenol, sulfur, phosphorus, benzotriazole, triazine, benzophenone, benzoate, and HALS.

Examples of the dispersing agent include a polyglycerol monoalkyl ether compound, a compound having a carboxylic acid structure such as a fatty acid ester, a polycarboxylic acid-based compound, and the like. These may be used alone or in combination of two or more thereof. In particular, a polyglycerol monoalkyl ether compound, a compound having a carboxylic acid structure, and a polycarboxylic acid-based compound are preferably used in combination.

The contents of these other additives are preferably more than 0 parts by mass and less than 20 parts by mass with respect to 100 parts by mass of the base oil composition.

<2. Inorganic powder filler>

The inorganic powder filler imparts high thermal conductivity to a thermally conductive composition. The inorganic powder filler to be used for the thermally conductive composition according to the present embodiment contains a first inorganic powder filler having an average particle diameter in a range of 10 $\mu$m or more and 100 $\mu$m or less, a second inorganic powder filler having an average particle diameter being different from the average particle diameter of the first inorganic powder filler, and a third inorganic powder filler having an average particle diameter being different from the average particle diameter of the first inorganic powder filler and the average particle diameter of the second inorganic powder filler.

Then, the average particle diameters of the inorganic powder fillers satisfy the following formulae (1) and (2).

$$D_2/D_1 < 0.70 \quad (1)$$

$$D_3/D_2 < 0.60 \quad (2)$$

[In the formulae, $D_1$ represents an average particle diameter of the first inorganic powder filler, $D_2$ represents an average particle diameter of the second inorganic powder filler, and $D_3$ represents an average particle diameter of the third inorganic powder filler.]

When a plurality of inorganic powder fillers having a predetermined relation of average particle diameters is contained, it is possible to reduce the base oil entering a gap between particles of the inorganic powder fillers. Therefore, the thermally conductive composition can uniformly spread in a state in which the content of the inorganic powder filler is increased.

The average particle diameter of the second inorganic powder filler is not particularly limited as long as the above formulae are satisfied, but the average particle diameter is preferably in a range of 1 $\mu$m or more and 50 $\mu$m or less. The thermally conductive composition can spread more uniformly in a state in which the content of the inorganic powder filler is increased.

The average particle diameter of the third inorganic powder filler is not particularly limited as long as the above formulae are satisfied, but the average particle diameter is preferably in a range of 0.1 $\mu$m or more and 5 $\mu$m or less. Thus, the thermally conductive composition can spread more uniformly in a state in which the content of the inorganic powder filler is increased.

The content of each of the first, second, and third inorganic powder fillers is not particularly limited, but it is preferable that the content of the first inorganic powder filler is 40 parts by mass or more and 80 parts by mass or less, the content of the second inorganic powder filler is 10 parts by mass or more and 50 parts by mass or less, and the content of the third inorganic powder filler is 10 parts by mass or more and 40 parts by mass or less, respectively, with respect to 100 parts by mass of the inorganic powder filler. When the content of each of the first and second inorganic powder fillers is in such a range, the thermally conductive composition can spread more uniformly in a state in which the content of the inorganic powder filler is increased.

Types of the inorganic powder filler to be used for the thermally conductive composition of the present embodiment are not particularly limited as long as they have higher thermal conductivity than the base oil, and, for example, powders such as metallic oxide, inorganic nitride, metal (also including an alloy), a silicon compound, and the like, are preferably used. As the inorganic powder filler of the present invention, one type may be used, or two or more types may be used in combination.

For obtaining electrical insulation, powders of nonconductive materials of semiconductor or ceramic, such as zinc oxide, magnesium oxide, aluminum oxide, aluminum nitride, boron nitride, silicon carbide, silica, and diamond can be preferably used, powder of zinc oxide, magnesium oxide, aluminum oxide, aluminum nitride, boron nitride, silicon carbide, and silica is more preferable, and powder of zinc oxide, aluminum oxide and aluminum nitride is particularly preferable. These inorganic powder fillers may be used alone or two or more thereof may be used in combination.

When metal is used as the inorganic powder filler, powder of copper, aluminum, and the like, can be used.

Note here that the first, second, and third inorganic powder fillers mean inorganic powder fillers having a predetermined average particle diameter, and may include inorganic powder fillers having different materials. For example, the first inorganic powder filler may be an inorganic powder filler made of one type of material, or may be an inorganic powder filler made of two types or more materials as long as an average particle diameter is the same. The same is true to the second and third inorganic powder fillers.

Furthermore, the thermally conductive composition of the present embodiment may contain an inorganic powder filler having different average particle diameter, other than the above first, second, and third inorganic powder fillers. However, the content of the first, second, and third inorganic powder fillers contained in the thermally conductive composition of the present embodiment is preferably 80% by mass or more, more preferably 90% by mass or more, further preferably 95% by mass or more, further more preferably 99% by mass or more, and the most preferably 100% by mass (in other words, inorganic powder fillers having different average particle diameter other than the above first, second, and third inorganic powder fillers are not contained) with respect to 100% by mass of the inorganic powder filler.

Note here that in the thermally conductive composition according to the present embodiment, the average particle diameter of the inorganic powder filler can be calculated as volume average diameter of particle size distribution measured by the laser diffraction scattering method (in accordance with JIS R 1629: 1997).

The content of the inorganic powder filler is preferably 50% by mass or more and 90% by mass or less, and more preferably 60% by mass or more and 90% by mass or less with respect to 100% by mass of thermally conductive composition. The content is preferably 50% by mass or more, because the thermal conductivity of the thermally conductive composition itself can be sufficiently enhanced, and oil separation of the base oil can be suppressed to suppress leakage of the base oil. On the other hand, when the content is 93% by mass or less, deterioration of consistency is suppressed, and at the time of heating, the thermally conductive composition can spread more uniformly.

<3. Method for producing thermally conductive composition>

A method for producing the thermally conductive composition of the present embodiment is not particularly limited as long as components can be mixed uniformly. In a general production method, kneading is carried out using a planetary mixer, a rotation-revolution mixer, and the like, and uniformly kneading is carried out using a three-roll mill.

<4. Thermally conductive sheet and method for producing thermally conductive sheet>

A thermally conductive sheet can be produced using the thermally conductive composition according to the present embodiment. The thermally conductive sheet can be produced by melt extrusion, or by a method of sandwiching the thermally conductive composition between the base materials and allowing it to pass through between the heating rolls.

Such a thermally conductive sheet has moderate flexibility and high handling property, and can be handled singly. For example, the thermally conductive sheet may be transported singly, and the heat generating component and the heat dissipating component can be joined to each other via the thermally conductive sheet at the transport destination.

EXAMPLES

Hereinafter, the present invention will be described in more detail based on Examples and Comparative Examples, but the present invention is not limited to the following Examples.

1. Production of thermally conductive composition Materials shown in the following (A) to (E) were used to produce thermally conductive compositions having compositions shown in the following Tables 1 and 2.

[Configuration and production method of thermally conductive composition]

(Constituting components)

(A) Thermally conductive filler

(A)-1: First inorganic powder filler

Alumina 1: Average particle diameter = 40 $\mu$m
Alumina 2: Average particle diameter = 30 $\mu$m

Alumina 3: Average particle diameter = 50 μm
Alumina 4: Average particle diameter = 70 μm
Alumina 5: Average particle diameter = 110 μm
Alumina 6: Average particle diameter = 5 μm

(A)-2: Second inorganic powder filler

Alumina 7: Average particle diameter = 8 μm
Alumina 8: Average particle diameter = 15 μm
Alumina 9: Average particle diameter = 20 μm
Alumina 10: Average particle diameter = 30 μm
Alumina 11: Average particle diameter = 3.4 μm
Zinc oxide 1: Average particle diameter = 10 μm

(A)-3: Third inorganic powder filler

Alumina 12: Average particle diameter = 0.53 μm
Alumina 13: Average particle diameter = 0.83 μm
Alumina 14: Average particle diameter = 0.18 μm
Alumina 15: Average particle diameter = 5 μm
Zinc oxide 2: Average particle diameter = 0.60 μm

Note here that the average particle diameter of each of the inorganic powder fillers was measured by using a particle size distribution measuring device (SALD-7000 manufactured by Shimadzu Corporation) by a laser diffraction and scattering method (in accordance with JIS R 1629: 1997).

(B) Base oil

(B)-1: Dipentaerythritol isononanoate (ester-based oil)
(B)-2: Tri(2-ethylhexyl) trimellitate (ester-based oil)
(B)-3: Tri(3,5,5-trimethylhexyl) trimellitate (ester base oil)

(C): Thermoplastic resin

(C)-1: Mixture of ester wax and rosin derivative. A thermoplastic resin having a mixing ratio of 150 parts by mass of rosin derivative with respect to 100 parts by mass of ester wax was used. The softening point of this thermoplastic resin is 110°C.
(C)-2: Acrylic resin (softening point: 105°C)
(C)-3: Cellulose resin (softening point: 135°C)
(C)-4: Ester resin (softening point: 70°C)

(D): Thixotropy adjusting agent

(D)-1: Organically treated bentonite
(D)-2: Organically treated sepiolite

(E) Dispersing agent

(E)-1: Acid-based hydrocarbon polymer
(E)-2: Higher fatty acid ester

The materials (A) to (E) having the compositions shown in following Tables 1 and 2 were mixed in a planetary mixer, the obtained mixture was placed in a tank of a universal mixing stirrer which had been heated at 150°C, subjected to kneading and vacuum-defoaming for 30 minutes, cooled, and then, taken out of the tank to obtain a thermally conductive composition.

[Table 1-1]

| | Inorganic powder filler | | | | | | | | Base oil | Thermo plastic resin | Total content of baseoil and thermoplastic resin with respect to 100 parts by mass of inorganic powder filler (Parts by mass) | Content of thermoplastic resin with respect to 100 parts by mass of base oill (Parts by mass) | Thixotropy adjusting agent | | Dispersing agent | |
|---|---|---|---|---|---|---|---|---|---|---|---|---|---|---|---|---|
| | Type | | | Content of each component with respect to 100 parts by mass of inorganic powder filler (Parts by mass) | | | Ratio of average particle diameters | | Type | Type | | | Type | Content of thixotropy adjusting agent with respect to 100 parts by mass of base oil (Parts by mass) | Type | Content of dispersing agent with respect to 100 parts by mass of base oil (Parts by mass) |
| | First | Second | Third | First | Second | Third | $D_2/D_1$ | $D_3/D_2$ | | | | | | | | |
| Example1 | Alumina 1 | Alumina 7 | Alumina 12 | 62.0 | 24.0 | 14.0 | 0.20 | 0.07 | (B)-1 | (C)-1 | 19.8 | 100 | (D)-1 | 2.5 | (E)-1 | 5.5 |
| Example2 | Alumina 1 | Alumina 7 | Alumina 12 | 70.0 | 17.5 | 12.5 | 0.20 | 0.07 | (B)-1 | (C)-1 | 19.8 | 100 | (D)-1 | 2.5 | (E)-1 | 5.5 |
| Example3 | Alumina 1 | Alumina 7 | Alumina 12 | 80.0 | 10.0 | 10.0 | 0.20 | 0.07 | (B)-1 | (C)-1 | 19.8 | 100 | (D)-1 | 2.5 | (E)-1 | 5.5 |
| Example4 | Alumina 1 | Alumina 7 | Alumina 12 | 52.0 | 28.0 | 20.0 | 0.20 | 0.07 | (B)-1 | (C)-1 | 19.5 | 100 | (D)-1 | 2.5 | (E)-1 | 5.5 |
| Example5 | Alumina 1 | Alumina 7 | Alumina 12 | 41.0 | 29.5 | 29.5 | 0.20 | 0.07 | (B)-1 | (C)-1 | 19.8 | 100 | (D)-1 | 2.5 | (E)-1 | 5.5 |
| Example6 | Alumina 1 | Alumina 7 | Alumina 12 | 62.0 | 24.0 | 14.0 | 0.20 | 0.07 | (B)-1 | (C)-1 | 19.8 | 100 | (D)-1 | 2.5 | (E)-1 | 5.5 |

EP 4 119 616 A1

[Table 1-2]

| | | | | | | | | | | | | | | | | |
|---|---|---|---|---|---|---|---|---|---|---|---|---|---|---|---|---|
| Example 7 | Alumina 2 | Alumina 7 | Alumina 12 | 62.0 | 24.0 | 14.0 | 0.27 | 0.07 | (B)-1 | (C)-1 | 19.8 | 100 | (D)-1 | 2.5 | (E)-1 | 5.5 |
| Example8 | Alumina 3 | Alumina 7 | Alumina 12 | 62.0 | 24.0 | 14.0 | 0.16 | 0.07 | (B)-1 | (C)-1 | 19.8 | 100 | (D)-1 | 2.5 | (E)-1 | 5.5 |
| Example 9 | Alumina 4 | Alumina 7 | Alumina 12 | 62.0 | 24.0 | 14.0 | 0.11 | 0.07 | (B)-1 | (C)-1 | 19.8 | 100 | (D)-1 | 2.5 | (E)-1 | 5.5 |
| Example10 | Alumina 1 | Alumina 8 | Alumina 12 | 62.0 | 24.0 | 14.0 | 0.38 | 0.04 | (B)-1 | (C)-1 | 19.8 | 100 | (D)-1 | 2.5 | (E)-1 | 5.5 |
| Example11 | Alumina 1 | Alumina 9 | Alumina 13 | 62.0 | 24.0 | 14.0 | 0.40 | 0.04 | (B)-1 | (C)-1 | 19.8 | 100 | (D)-1 | 2.5 | (E)-1 | 5.5 |
| Example12 | Alumina 1 | Alumina 7 | Alumina 13 | 62.0 | 24.0 | 14.0 | 0.20 | 0.10 | (B)-1 | (C)-1 | 19.8 | 100 | (D)-1 | 2.5 | (E)-1 | 5.5 |
| Example13 | Alumina 1 | Alumina 7 | Alumina 14 | 62.0 | 24.0 | 14.0 | 0.20 | 0.02 | (B)-1 | (C)-1 | 19.8 | 100 | (D)-1 | 2.5 | (E)-1 | 5.5 |
| Example14 | Alumina 1 | Alumina 7 | Alumina 12 | 62.0 | 24.0 | 14.0 | 0.20 | 0.07 | (B)-1 | (C)-1 | 19.5 | 100 | (D)-1 | 5.6 | (E)-1 | 0.5 |
| Example15 | Alumina 1 | Alumina 7 | Alumina 12 | 62.0 | 24.0 | 14.0 | 0.20 | 0.07 | (B)-1 | (C)-1 | 19.1 | 100 | (D)-1 | 9.9 | (E)-1 | 0.5 |
| Example16 | Alumina 1 | Alumina 7 | Alumina 12 | 62.0 | 24.0 | 14.0 | 0.20 | 0.07 | (B)-1 | (C)-1 | 19.9 | 100 | (D)-1 | 1.5 | (E)-1 | 0.5 |
| Example17 | Alumina 1 | Alumina 7 | Alumina 12 | 62.0 | 24.0 | 14.0 | 0.20 | 0.07 | (B)-1 | (C)-1 | 19.9 | 100 | (D)-1 | 1.2 | (E)-1 | 0.5 |
| Example18 | Alumina 1 | Alumina 7 | Alumina 12 | 62.0 | 24.0 | 14.0 | 0.20 | 0.07 | (B)-1 | (C)-1 | 19.8 | 60 | (D)-1 | 2.5 | (E)-1 | 5.5 |
| Example19 | Alumina 1 | Alumina 7 | Alumina 12 | 62.0 | 24.0 | 14.0 | 0.20 | 0.07 | (B)-1 | (C)-1 | 19.8 | 190 | (D)-1 | 2.5 | (E)-1 | 5.5 |

[Table 2-1]

| | Inorganic powder filler | | | | | | | | Base oil | Thermoplastic resin | Total content of base oil and thermoplastic resin with respect to 100 parts by mass of inorganic powder filler (Parts by mass) | Content of thermoplastic resin with respect to 100 parts by mass of base oil (Parts by mass) | Thixotropy adjusting agent | | Dispersing agent | |
| | Type | | | Content of each component with respect to 100 parts by mass of inorganic powder filler (Parts by mass) | | | Ratio of average particle diameters | | Type | Type | | | Type | Content of thixotropy adjusting agent with respect to 100 parts by mass of base oil (Parts by mass) | Type | Content of dispersing agent with respect to 100 parts by mass of base oil (Parts by mass) |
| | First | Second | Third | First | Second | Third | $D_2/D_1$ | $D_3/D_2$ | | | | | | | | |
| Example20 | Alumina 1 | Zinc oxide 1 | Alumina 12 | 62.0 | 24.0 | 14.0 | 0.25 | 0.05 | (B)-1 | (C)-1 | 19.8 | 100 | (D)-1 | 2.5 | (E)-1 | 5.5 |
| Example21 | Alumina 1 | Alumina 7 | Zinc oxide 2 | 62.0 | 24.0 | 14.0 | 0.20 | 0.08 | (B)-1 | (C)-1 | 19.8 | 100 | (D)-1 | 2.5 | (E)-1 | 5.5 |
| Example22 | Alumina 1 | Alumina 7 | Alumina 12 | 62.0 | 24.0 | 14.0 | 0.20 | 0.07 | (B)-2 | (C)-1 | 19.8 | 100 | (D)-1 | 2.5 | (E)-1 | 5.5 |
| Example23 | Alumina 1 | Alumina 7 | Alumina 12 | 62.0 | 24.0 | 14.0 | 0.20 | 0.07 | (B)-3 | (C)-1 | 19.8 | 100 | (D)-1 | 2.5 | (E)-1 | 5.5 |

[Table 2-2]

| | | | | | | | | | | | | | | | | |
|---|---|---|---|---|---|---|---|---|---|---|---|---|---|---|---|---|
| Example24 | Alumina 1 | Alumina 7 | Alumina 12 | 62.0 | 24.0 | 14.0 | 0.20 | 0.07 | (B)-1 | (C)-1 | 19.8 | 100 | (D)-2 | 2.5 | (E)-1 | 5.5 |
| Example25 | Alumina 1 | Alumina 7 | Alumina 12 | 62.0 | 24.0 | 14.0 | 0.20 | 0.07 | (B)-1 | (C)-1 | 19.8 | 100 | (D)-2 | 2.5 | (E)-2 | 5.5 |
| Example25 | Alumina 1 | Alumina 7 | Alumina 12 | 62.0 | 24.0 | 14.0 | 0.20 | 0.07 | (B)-1 | (C)-1 | 19.8 | 75 | (D)-1 | 2.5 | (E)-1 | 5.5 |
| Example27 | Alumina 1 | Alumina 7 | Alumina 12 | 62.0 | 24.0 | 14.0 | 0.20 | 0.07 | (B)-1 | (C)-1 | 19.8 | 55 | (D)-1 | 2.5 | (E)-1 | 5.5 |
| Example28 | Alumina 1 | Alumina 7 | Alumina 12 | 62.0 | 24.0 | 14.0 | 0.20 | 0.07 | (B)-1 | (C)-1 | 19.8 | 150 | (D)-1 | 2.5 | (E)-1 | 5.5 |
| Example29 | Alumina 1 | Alumina 7 | Alumina 12 | 62.0 | 24.0 | 14.0 | 0.20 | 0.07 | (B)-1 | (C)-1 | 19.8 | 195 | (D)-1 | 2.5 | (E)-1 | 5.5 |
| Example30 | Alumina 1 | Alumina 7 | Alumina 12 | 62.0 | 24.0 | 14.0 | 0.20 | 0.07 | (B)-1 | (C)-2 | 19.8 | 100 | (D)-1 | 2.5 | (E)-1 | 5.5 |
| Example31 | Alumina 1 | Alumina 7 | Alumina 12 | 62.0 | 24.0 | 14.0 | 0.20 | 0.07 | (B)-1 | (C)-3 | 19.8 | 100 | (D)-1 | 2.5 | (E)-1 | 5.5 |
| Example32 | Alumina 1 | Alumina 7 | Alumina 12 | 62.0 | 24.0 | 14.0 | 0.20 | 0.07 | (B)-1 | (C)-4 | 19.8 | 100 | (D)-1 | 2.5 | (E)-1 | 5.5 |
| Comparative Example 1 | Alumina 1 | Alumina 10 | Alumina 12 | 62.0 | 24.0 | 14.0 | 0.75 | 0.02 | (B)-1 | (C)-1 | 19.8 | 100 | (D)-1 | 2.5 | (E)-1 | 0.5 |
| Comparative Example 2 | Alumina 1 | Alumina 7 | Alumina 15 | 62.0 | 24.0 | 14.0 | 0.20 | 0.63 | (B)-1 | (C)-1 | 19.8 | 100 | (D)-1 | 2.5 | (E)-1 | 0.5 |
| Comparative Example 3 | Alumina 5 | Alumina 9 | Alumina 12 | 62.0 | 24.0 | 14.0 | 0.18 | 0.03 | (B)-1 | (C)-1 | 19.8 | 100 | (D)-1 | 2.5 | (E)-1 | 0.5 |
| Comparative Example 4 | Alumina 6 | Alumina 11 | Alumina 12 | 62.0 | 24.0 | 14.0 | 0.68 | 0.16 | (B)-1 | (C)-1 | 19.8 | 100 | (D)-1 | 2.5 | (E)-1 | 0.5 |
| Comparative Example 5 | Alumina 1 | Alumina 7 | Alumina 12 | 62.0 | 24.0 | 14.0 | 0.20 | 0.07 | (B)-1 | (C)-1 | 18.6 | 100 | (D)-1 | 14.7 | (E)-1 | 0.5 |
| Comparative Example 6 | Alumina 1 | Alumina 7 | Alumina 12 | 62.0 | 24.0 | 14.0 | 0.20 | 0.07 | (B)-1 | (C)-1 | 19.9 | 100 | (D)-1 | 0.61 | (E)-1 | 0.5 |
| Comparative Example 7 | Alumina 1 | Alumina 7 | Alumina 12 | 62.0 | 24.0 | 14.0 | 0.20 | 0.07 | (B)-1 | (C)-1 | 19.8 | 20 | (D)-1 | 2.5 | (E)-1 | 5.5 |
| Comparative Example 8 | Alumina 1 | Alumina 7 | Alumina 12 | 62.0 | 24.0 | 14.0 | 0.20 | 0.07 | (B)-1 | (C)-1 | 19.8 | 250 | (D)-1 | 2.5 | (E)-1 | 5.5 |

2. Production of thermally conductive sheet

The thermally conductive composition of each of Examples and Comparative Examples was heated on one-side fluorine-treated PET film having a thickness of 0.05 mm and width of 100 mm in a heating furnace set at 100°C to make the thermally conductive composition into a melted state, and then a one-side fluorine-treated PET film of the same type was placed on the fluorine-treated surface so as to bring the fluorine-treated surface into contact to sandwich the thermally conductive composition, which was allowed to pass between heating rolls set at 100°C. After cooling, the obtained product was cut into 100 mm in length, and the PET film was peeled off to obtain a thermally conductive sheet having film thicknesses of 0.1 mm and 0.5 mm.

3. Evaluation

[Evaluation of thermal conductivity]

The thermal conductivity of the thermally conductive sheets of the thermally conductive compositions of Examples and Comparative Examples produced above was measured. Specifically, the thermal conductivity of the thermally conductive sheets was measured using a transient heat measuring device (in accordance with ASTMD5470) at room temperature. Evaluation results are shown in Tables 3 and 4 (in Tables, described as "thermal conductivity").

[Evaluation of malleability]

The thermally conductive sheets of the thermally conductive compositions of Examples and Comparative Examples produced above were evaluated for malleability. Specifically, a film thickness of the thermally conductive sheet when the thermally conductive sheet having a film thickness of 0.5 mm was pressed and crushed with a pressure of 0.1 MPa applied under environment at 80°C was measured. Evaluation results are shown in Tables 3 and 4 (in Tables, described as "malleability").

[Evaluation of initial flexibility of thermally conductive sheet]

The thermally conductive sheets of the thermally conductive compositions of Examples and Comparative Examples produced above were observed for flexibility in the initial state. Specifically, when a thermally conductive sheet having a film thickness of 0.1 mm was folded, the thermally conductive sheet having no crack and having excellent flexibility was evaluated as "O (good)" for the initial flexibility. On the other hand, when a thermally conductive sheet was folded, the thermally conductive sheet having a crack and having poor flexibility was evaluated as "X (poor)" for the initial flexibility. Evaluation results are shown in Tables 3 and 4 (in Tables, described as "initial state" in "flexibility").

[Evaluation of flexibility of thermally conductive sheet after heating]

The thermally conductive sheets of the thermally conductive compositions of Examples and Comparative Examples produced above were evaluated for flexibility after heating. Specifically, a PET film was cut into 100 mm in length after the rolling treatment with the heating roll, and at this time, a thermally conductive sheet having a film thickness of 0.1 mm, in which only one side of the PET film was peeled off and the other side was attached to the PET film, was used as a test sample. This test sample was placed in an electric furnace that has been heated to 250°C in such a manner that a surface to which the PET film was attached faced lower side, and held for four hours. Thereafter, the test sample was taken out and cooled, and the thermally conductive sheet was bent at about 150° ten times, the flexibility of the sheet was determined based on two criteria of "O (good)" (no crack occurred), "X (poor)" (crack occurred at less than 10 times), and presence or absence of flexibility after heating was determined. Evaluation results are shown in Tables 3 and 4 (in Tables, described as "after heating" in "flexibility").

[Evaluation of sagging resistance]

The thermally conductive sheets of the thermally conductive compositions of Examples and Comparative Examples produced above were evaluated for sagging resistance. Specifically, a thermally conductive sheet having a film thickness of 0.5 mm was placed on a glass substrate and heated in a heating furnace set at 80°C for 10 minutes, and the thermally conductive sheet and the glass substrate were allowed to adhere to each other to obtain a test sample. Next, the test sample was then placed in a vertical orientation in an electric furnace that had been heated to 150°C and held for 4 hours. The test sample was taken out and cooled, and then the thermally conductive sheet was visually observed. The presence or absence of sagging was determined based on two criteria, that is, sagging was evaluated as "O (good)" (no sagging was observed) and "X (poor)" (sagging was observed) immediately after the test sample was placed in a vertical orientation in the electric furnace (initial state) and when the test sample was placed in a vertical orientation in the electric furnace and held for four hours. Evaluation results are shown in Tables 3 and 4 (in Tables, described as "initial state" and "after heating" in "sagging resistance").

[Cycle test evaluation]

The thermally conductive sheets of the thermally conductive compositions of Examples and Comparative Examples produced above were subjected to a cycle test. Specifically, a thermally conductive sheet having a film thickness of 0.5 mm which had been punched to a diameter of 10 mm was placed on an aluminum plate, and was heated in a heating furnace set at 80°C for 10 minutes to allow the thermally conductive sheet to adhere to the aluminum plate. Thereafter, 0.5 mm-spacer was provided and a slide glass was put thereon, and the thermally conductive sheet was sandwiched to obtain a test sample. The test sample was placed vertically from the ground in a heat cycle tester set to alternate between 0°C and 100°C (30 minutes each) and tested for 1000 cycles. After 1000 cycles, a migration length (mm) by which the thermally conductive sheet moved from its original location was measured. Evaluation results are shown in Tables 3 and 4 (in Tables, described as "cycle test").

[Table 3]

| | Evaluation results | | | | | | |
| | Thermal conductivity (W/ (m · K)) | Malleability (um) | Flexibility | | Sagging resistance | | Cycle test |
| | | | Initial state | After heating | Initial state | After heating | After 1000 cycles |
| Example1 | 2.27 | 46 | ○ | ○ | ○ | ○ | 0.5 |
| Example2 | 2.31 | 62 | ○ | ○ | ○ | ○ | 0.6 |
| Example8 | 2.40 | 78 | ○ | ○ | ○ | ○ | 0.7 |
| Example4 | 2.36 | 83 | ○ | ○ | ○ | ○ | 0.5 |
| Example5 | 2.40 | 92 | ○ | ○ | ○ | ○ | 0.6 |
| Example6 | 2.18 | 42 | ○ | ○ | ○ | ○ | 0.5 |
| Example 7 | 2.17 | 43 | ○ | ○ | ○ | ○ | 0.5 |
| Example8 | 2.44 | 72 | ○ | ○ | ○ | ○ | 0.5 |
| Example9 | 2.53 | 85 | ○ | ○ | ○ | ○ | 0.9 |
| Example10 | 2.31 | 53 | ○ | ○ | ○ | ○ | 0.5 |
| Examplel11 | 2.36 | 68 | ○ | ○ | ○ | ○ | 0.5 |
| Example12 | 24.0 | 55 | ○ | ○ | ○ | ○ | 0.5 |
| Example13 | 2.23 | 72 | ○ | ○ | ○ | ○ | 0.5 |
| Example14 | 2.44 | 48 | ○ | ○ | ○ | ○ | 0.4 |
| Example15 | 2.53 | 51 | ○ | ○ | ○ | ○ | 0.4 |
| Example16 | 2.14 | 45 | ○ | ○ | ○ | ○ | 0.6 |
| Example17 | 2.10 | 44 | ○ | ○ | ○ | ○ | 0.7 |
| Example18 | 2.34 | 51 | ○ | ○ | ○ | ○ | 0.7 |
| Example19 | 2.45 | 65 | ○ | ○ | ○ | ○ | 0.6 |

[Table 4]

| | Evaluation results | | | | | | |
| --- | --- | --- | --- | --- | --- | --- | --- |
| | Thermal conductivity (W/(m ▪ K)) | Malleability (um) | Flexibility | | Sagging resistance | | Cycle test |
| | | | Initial state | After heating | Initial state | After heating | After 1000 cycles |
| Example20 | 2.43 | 45 | ○ | ○ | ○ | ○ | 0.7 |
| Example21 | 2.35 | 48 | ○ | ○ | ○ | ○ | 0.7 |
| Example22 | 2.25 | 48 | ○ | ○ | ○ | ○ | 0.6 |
| Example23 | 2.23 | 47 | ○ | ○ | ○ | ○ | 0.6 |
| Example24 | 2.24 | 45 | ○ | ○ | ○ | ○ | 0.5 |
| Example25 | 2.24 | 45 | ○ | ○ | ○ | ○ | 0.5 |
| Example26 | 2.13 | 45 | ○ | ○ | ○ | ○ | 0.3 |
| Example27 | 2.16 | 41 | ○ | ○ | ○ | ○ | 1.1 |
| Example28 | 2.35 | 55 | ○ | ○ | ○ | ○ | 0.7 |
| Example29 | 2.42 | 68 | ○ | ○ | ○ | ○ | 0.6 |
| Example30 | 2.25 | 43 | ○ | ○ | ○ | ○ | 0.7 |
| Example31 | 2.28 | 53 | ○ | ○ | ○ | ○ | 0.6 |
| Example32 | 2.26 | 43 | ○ | ○ | ○ | ○ | 1 |
| Comparative Example 1 | | | × | | | | |
| Comparative Example 2 | | | × | | | | |
| comparative Example 3 | 2.40 | 243 | ○ | | | | |
| Comparative Example4 | | | × | | | | |
| Comparative Example 5 | | | × | | | | |
| Comparative Example 6 | 2.10 | 47 | ○ | ○ | ○ | × | 26 |
| Comparative Example7 | 2.25 | 43 | ○ | ○ | ○ | × | 15 |
| Comparative Example8 | | | × | | | | |

As is apparent from Tables 3 and 4, the thermally conductive compositions of Examples 1 to 32 showed high malleability at the time of heating at 80°C and pressurizing at 0.1 MPa, good flexibility and sagging resistance after heating, and a small migration length from the original place in the cycle evaluation test. This shows that the thermally conductive compositions of Examples 1 to 32 could be easily molded, for example, into a sheet, and occurrence of pump-out could be effectively suppressed.

Note here that similarly in Examples 30 to 32 in which the type of the "thermoplastic resin having a softening point of 50°C or more and 150°C or less" was changed, it is shown that the thermally conductive compositions could be easily molded, for example, into a sheet, and that occurrence of pump-out could be effectively suppressed.

On the other hand, in Comparative Example 1 in which the ratio of the average particle diameters of the inorganic powder fillers, $D_2/D_1$, was more than 0.7, and in Comparative Example 2 in which $D_3/D_2$ was more than 0.6, crack was observed after the thermally conductive sheet was folded. This shows that the thermally conductive compositions of Comparative Examples 1 and 2 could not achieve the object of the present invention that molding such as forming a sheet is easily carried out.

Furthermore, in Comparative Example 3 in which the average particle diameter of the first inorganic powder filler was more than 100 $\mu$m, a film thickness of the thermally conductive sheet when the thermally conductive sheet was pressed and crushed was large, and the object of the present invention that molding such as forming a sheet is easily carried out could not be achieved. In addition, in Comparative Example 4 in which the average particle diameter of the first inorganic powder filler was less than 10 $\mu$m, crack occurred after the thermally conductive sheet was folded, and the object of the present invention that molding such as forming a sheet is easily carried out could not be achieved.

Furthermore, in Comparative Example 5 in which more than 10 parts by mass of thixotropy adjusting agent was contained with respect to 100 parts by mass of the base oil, the thermally conductive composition was not made greasy, and could not be formed into a sheet. In addition, in Comparative Example 6 in which less than 1 part by mass of thixotropy adjusting agent was contained, sagging resistance was poor, and further, the migration length from the original place after 1000 cycles was large, showing that the thermally conductive composition had inferior pump-out resistance.

Furthermore, in Comparative Example 7 in which less than 50 parts by mass of the thermoplastic resin was contained with respect to 100 parts by mass of base oil, the sagging resistance was poor, and further, the migration length from the original place after 1000 cycles was large, showing that the thermally conductive composition had inferior pump-out resistance. Furthermore, in Comparative Example 8 in which more than 200 parts by mass of thermoplastic resin was contained, crack occurred after the thermally conductive sheet was folded, and the object of the present invention that molding such as forming a sheet is easily carried out could not be achieved. Note here that in Comparative Examples 1, 2, 4, 5, and 8 in which crack occurred after the thermally conductive sheet was folded, a thermally conductive sheet was not able to be molded, so that the thermal conductivity, malleability, flexibility after heating, sagging resistance, and cycle test were not carried out. Furthermore, Comparative Example 3 in which the film thickness of the thermally conductive sheet was large in the malleability evaluation when the thermally conductive sheet was pressed and crushed, the thermal conductivity, flexibility after heating, sagging resistance, and cycle test were not carried out.

**Claims**

1. A thermally conductive composition comprising a base oil composition and an inorganic powder filler,

    the base oil composition comprising a base oil, a thermoplastic resin having a softening point of 50°C or more and 150°C or less, and a thixotropy adjusting agent,
    the inorganic powder filler comprises a first inorganic powder filler having an average particle diameter in a range of 10 $\mu$m or more and 100 $\mu$m or less, a second inorganic powder filler having an average particle diameter being different from the average particle diameter of the first inorganic powder filler, and a third inorganic powder filler having an average particle diameter being different from the average particle diameter of the first inorganic powder filler and the average particle diameter of the second inorganic powder filler,
    the inorganic powder filler having average particle diameters satisfying the following formulae (1) and (2),
    the base oil composition containing the thermoplastic resin in a content of 50 parts by mass or more and 200 parts by mass or less, and the thixotropy adjusting agent in a content of 1 part by mass or more and 10 parts by mass or less, with respect to 100 parts by mass of the base oil,

    $$D_2/D_1 < 0.70 \quad (1)$$

    $$D_3/D_2 < 0.60 \quad (2)$$

    wherein, in the formulae, $D_1$ represents an average particle diameter of the first inorganic powder filler, $D_2$ represents an average particle diameter of the second inorganic powder filler, and $D_3$ represents an average particle diameter of the third inorganic powder filler.

2. The thermally conductive composition according to claim 1, wherein the second inorganic powder filler has an average particle diameter in a range of 1 $\mu$m or more and 50 $\mu$m or less, and
    the third inorganic powder filler has an average particle diameter in a range of 0.1 $\mu$m or more and 5 $\mu$m or less.

3. The thermally conductive composition according to claim 1 or claim 2, comprising 40 parts by mass or more and 80 parts by mass or less of the first inorganic powder filler, 10 parts by mass or more and 50 parts by mass or less of the second inorganic powder filler, and 10 parts by mass or more and 40 parts by mass or less of the third inorganic powder filler with respect to 100 parts by mass of the inorganic powder filler.

4. The thermally conductive composition according to any one of claim 1 to claim 3, wherein a total of the base oil and the thermoplastic resin is 5.3 parts by mass or more and 33.3 parts by mass or less with respect to 100 parts by mass of the inorganic powder filler.

5. The thermally conductive composition according to any one of claim 1 to claim 4, wherein a thermally conductive sheet formed of the thermally conductive composition has a thickness of 200 $\mu$m or less, provided that the thickness is measured when the thermally conductive sheet with a film thickness of 0.5 mm formed on a surface of a base material is applied with a pressure of 0.1 MPa at 80°C.

6. The thermally conductive composition according to any one of claim 1 to claim 5, wherein the thermoplastic resin comprises at least one or more resins selected from an ester resin, an acrylic resin, a rosin resin, and a cellulose resin.

7. The thermally conductive composition according to any one of claim 1 to claim 6, wherein the base oil comprises at least one or more types selected from a mineral oil, a synthetic a hydrocarbon oil, a diester, polyol ester, and a phenyl ether.

8. The thermally conductive composition according to any one of claim 1 to claim 7, wherein the thixotropy adjusting agent comprises at least one or more types selected from bentonite, mica, kaolin, sepiolite, saponite, and hectorite.

9. The thermally conductive composition according to any one of claim 1 to claim 8, wherein the inorganic powder filler comprises at least one or more types selected from copper, aluminum, zinc oxide, magnesium oxide, aluminum oxide, aluminum nitride, and silicon carbide.

## INTERNATIONAL SEARCH REPORT

International application No.

PCT/JP20217009672

### A. CLASSIFICATION OF SUBJECT MATTER

Int.Cl. C08L91/00(2006.01)i, C08L101/12(2006.01)i, C09K5/14(2006.01)i, C08K3/013(2018.01)i, C08K3/34(2006.01)i
FI: C08L101/12, C08K3/013, C08K3/34, C09K5/14E, C08L91/00
According to International Patent Classification (IPC) or to both national classification and IPC

### B. FIELDS SEARCHED

Minimum documentation searched (classification system followed by classification symbols)
Int.Cl. C08L1/00-101/16, C09K5/14, C08K3/00-13/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2008-280516 A (COSMO OIL LUBRICANTS CO., LTD.) 20 November 2008 (2008-11-20), claims, paragraph [0032], examples | 1-9 |
| A | JP 2006-210437 A (COSMO OIL LUBRICANTS CO., LTD.) 10 August 2006 (2006-08-10), claims, examples | 1-9 |
| A | JP 6627947 B1 (SUMITOMO METAL MINING CO., LTD.) 08 January 2020 (2020-01-08), claims, paragraphs [0077], [0078], examples | 1-9 |
| A | JP 2001-89756 A (SAINT-GOBAIN PERFORMANCE PLASTICS CORPORATION) 03 April 2001 (2001-04-03), claims, examples | 1-9 |

☐ Further documents are listed in the continuation of Box C.     ☒ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 April 2021 | 11 May 2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| International application No. |
|---|
| PCT/JP20217009672 |

| | | |
|---|---|---|
| JP 2008-280516 A | 20 November 2008 | US 2010/0065774 A1<br>claims, paragraph [0049], examples<br>WO 2008/126829 A1<br>CN 101657528 A |
| JP 2006-210437 A | 10 August 2006 | (Family: none) |
| JP 6627947 B1 | 08 January 2020 | (Family: none) |
| JP 2001-89756 A | 03 April 2001 | US 2003/0039825 A1<br>claims, examples<br>EP 1067164 A1 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001089756 A
- JP 2004075760 A
- JP 2007150349 A
- JP 4713161 B